# EUROPÄISCHE PATENTSCHRIFT

(11) **EP 1 441 622 B1**
(45) Veröffentlichungstag und Bekanntmachung des Hinweises auf die Patenterteilung: **13.04.2005**
(21) Anmeldenummer: 02785314.2
(22) Anmeldetag: 25.10.2002
(51) Int. Cl.: A47C 7/46

(54) **VORRICHTUNG ZUR VERSTELLUNG EINER SITZKOMPONENTE**
DEVICE FOR DISPLACING A SEAT COMPONENT
DISPOSITIF POUR DEPLACER UN ELEMENT CONSTITUTIF DE SIEGE

(30) Priorität: 05.11.2001 DE 10154186
(43) Veröffentlichungstag der Anmeldung: 04.08.2004
(73) Patentinhaber: Schukra Europa GmbH, 90411 Nürnberg (DE)
(72) Erfinder: CALINESCU, Eugen, 90449 Nürnberg (DE)
(74) Vertreter: Banzer, Hans-Jörg, Dipl.-Ing.
(86) Internationale Anmeldenummer: PCT/EP2002/011975
(87) Internationale Veröffentlichungsnummer: WO 2003/039299

(56) Entgegenhaltungen:
- WO-A-99/65730
- US-A- 5 911 477
- US-A- 6 050 641

## Beschreibung

Die vorliegende Erfindung betrifft eine Vorrichtung zur Verstellung einer Komponente eines Sitzes oder einer Liege, mit einem Drehantrieb und einem von dem Drehantrieb antreibbaren Getriebe, das einen Abtrieb zum Verstellen der Komponente des Sitzes bzw. der Liege aufweist.

Sitze bzw. Liegen werden häufig mit verschiedenen Verstellmöglichkeiten ausgerüstet, um den Sitz- bzw. Liegekomfort erhöhen zu können. Mit den Verstellmöglichkeiten kann ein Sitz bzw. eine Liege an die wechselnden Bedürfnisse einer sitzenden bzw. liegenden Person angepasst werden. Diese Bedürfnisse können beispielsweise von den körperlichen Gegebenheiten der Person oder der von der Person ausgeführten Tätigkeit abhängen. Eine solche Verstellmöglichkeit ist beispielsweise die Einstellung des Winkels zwischen einer Sitzfläche und einer Rückenlehne eines Sitzes. Allgemein kann vorgesehen sein, dass ein Sitz bzw. eine Liege in verschiedene Segmente unterteilt ist, wobei der Winkel zwischen zwei benachbarten Segmenten verändert werden kann.

Neben solchen die äußere Form eines Sitzes bzw. einer Liege beeinflussenden Verstellmöglichkeiten können auch Verstellmöglichkeiten vorgesehen sein, die das Sitz- bzw. Liegeverhalten beeinflussen. Dazu zählen im Sitz bzw. in der Liege eingearbeitete Stützen, die die Person an bestimmten Stellen abstützen und die sich beispielsweise in Bezug auf ihre Anordnung und ihre Form verstellen lassen.

Um eine Verstellung an einem Sitz bzw. einer Liege vornehmen zu können, sind entsprechende Verstellvorrichtungen erforderlich, die manuell oder motorisch antreibbar sind.

So ist durch die EP-0 696 251 B1 eine Vorrichtung zur Höhenverstellung und/oder Wölbungsverstellung einer Lordosestütze mit einem von einem Antrieb angetriebenen Getriebe bekannt, bei dem der Antrieb eine Schnecke antreibt, die in ein Schneckenrad greift, das wiederum ein Ritzel antreibt, das mit einem eine Spule antreibenden Zahnrad kämmt. An der Spule ist ein Seilzug einer Bowdenzuganordnung befestigt, die zum Verstellen der Lordosestütze verwendet wird. Das die Spule antreibende Zahnrad weist einen Steg auf; der mit Anschlägen im Gehäuse des Getriebes zusammenwirkt, um den Verstellweg der Verstellvorrichtung zu begrenzen. Diese Verstellvorrichtung weist insbesondere den Nachteil auf, dass die erforderlichen Bauteile des Getriebes einen erheblichen Bauraum beanspruchen, der sich nachteilig auf die Integration des Getriebes in einem Sitz bzw. einer Liege auswirkt. Insbesondere wirkt sich dies nachteilig auf den Einbau einer solchen Verstellvorrichtung in einem Sitz für ein Kraftfahrzeug aus, in dem auf Grund anderer Komponenten und des geringen Platzangebotes geringe Abmessungen gefordert werden.

Der vorliegenden Erfindung liegt die Aufgabe zu Grunde, eine Verstellvorrichtung der eingangs genannten Art zu schaffen, die trotz eines geringen Aufwands einen geringen Platzbedarf aufweist.

Erfindungsgemäß wird diese Aufgabe durch eine Verstellvorrichtung mit den Merkmalen des Anspruchs 1 gelöst. Die Unteransprüche definieren jeweils bevorzugte und vorteilhafte Ausführungsformen der vorliegenden Erfindung.

Die erfindungsgemäße Verstellvorrichtung weist ein Planetengetriebe auf, dessen Zentralrad von dem Drehantrieb mittels eines Schneckengetriebes angetrieben wird. Das Zentralrad befindet sich mittig innerhalb eines Hohlrades, wobei zwischen dem Zentralrad und dem Hohlrad wenigstens ein Planetenrad angeordnet ist, das sowohl mit dem Zentralrad als auch dem Hohlrad kämmt. Das wenigstens eine Planetenrad ist an einem Planetenradträger drehbar gelagert, der wiederum konzentrisch zum Zentralrad drehbar gelagert ist. Bei einer solchen Anordnung sind das Schneckenrad, das Hohlrad und der Planetenradträger konzentrisch zueinander angeordnet, so dass eine gegenüber dem Stand der Technik verringerte Baugröße erreicht wird. Dies wird insbesondere auf Grund der Tatsache erreicht, dass das Schneckenrad und das Hohlrad die Räder in dem Getriebe mit dem größten Durchmesser sind. Durch die konzentrische Anordnung gerade der großen Räder wird eine kompaktere Bauform erreicht.

Wenn bei der erfindungsgemäßen Verstellvorrichtung eine Begrenzung des Verstellweges gewünscht ist, kann dies vorteilhafterweise dadurch erreicht werden, dass das Hohlrad nur über einen Teil seines Umfangs mit einer Innenverzahnung versehen wird. Der restliche Teil des Umfangs des Hohlrads wird so ausgestaltet, dass das Planetenrad nur in dem innenverzahnten Teil abrollen kann. Dies kann beispielsweise dadurch geschehen, dass der nicht innenverzahnte Teil so weit in Richtung des Zentralrads vorragt, dass die Zähne des Planetenrads auf diesem nicht innenverzahnten Teil anschlagen, sobald sie diesen Teil erreichen. Auf diese Weise kann mit einem besonders geringen Aufwand eine Begrenzung des Verstellweges der Verstellvorrichtung erreicht werden, wobei diese Art der Begrenzung den Vorteil aufweist, dass das Anschlagen an eine Begrenzung wenig Störgeräusche verursacht. In dem Planetengetriebe kann eine beliebige Anzahl an Planetenrädern verwendet werden, wobei die maximal mögliche Anzahl an Planetenrädern insbesondere von der Untersetzung des Planetengetriebes, der von dem Planetengetriebe zu übertragenden Kraft und einer gewünschten Begrenzung des Verstellweges der Verstellvorrichtung abhängt. Dabei steigt mit der Anzahl der Planetenräder der zur Herstellung der Verstellvorrichtung erforderliche Aufwand, wobei mit steigender Anzahl an Planetenrädern jedoch eine bessere Lastverteilung innerhalb des Planetengetriebes erreicht werden kann. Wird zur Begrenzung des Verstellweges der Verstellvorrichtung ein Teil des Hohlrads ohne Innenverzahnung ausgeführt, so ist der maximal mögliche Verdrehbereich des Planetenradträgers der zwischen benachbarten Planetenrädern liegende Winkelbereich. Vorteilhafterweise weist daher das Planetengetriebe nur ein Planetenrad auf, so dass bei vorgesehenen Begrenzungen ein maximaler Verdrehbereich des Planetenradträgers von nahezu 360° möglich ist und sich damit ein großer Spielraum für den begrenzten Verdrehbereich ergibt.

Vorteilhafterweise wird das Zentralrad von einem Schneckenrad angetrieben, in das eine von dem Drehantrieb angetriebene Schnecke eingreift. Dies hat den Vorteil, dass mit einer einzigen Getriebestufe eine große Untersetzung erreicht wird und insbesondere eine Kraftrückwirkung von der verstellbaren Sitz- bzw. Liegekomponente auf den Drehantrieb verhindert wird. Der Drehantrieb ist auf diese Weise in der Lage, bei Stillstand die verstellbare Komponente in ihrer augenblicklichen Verstellsituation zu halten, selbst wenn diese eine Kraft auf das Getriebe ausübt.

Als Abtrieb für das Getriebe wird vorteilhafterweise eine Trommel verwendet, an der ein Zugseil verbunden und aufwickelbar ist. Mit einem solchen Zugseil kann die Verstellbewegung mit besonders geringem Aufwand von dem Drehantrieb an einen anderen Ort geleitet werden. Vorteilhafterweise wird das Zugseil in einer Bowdenzuganordnung geführt.

Insbesondere bei Verwendung eines Zugseils kann eine Rückholfeder eingesetzt werden, die entgegen der Zugwirkung des Zugseils eine Kraft auf die verstellbare Komponente ausübt.

Die erfindungsgemäße Verstellvorrichtung eignet sich besonders vorteilhaft zur Verstellung einer Lordosestütze innerhalb einer Rückenlehne eines Sitzes bzw. einer Liege. Die Lordosestütze kann dabei sowohl in Bezug auf die Lage innerhalb der Rückenlehne als auch die Form verstellbar sein. Vorteilhafterweise ist die Lordosestütze in der Rückenlehne mittig angeordnet und in Bezug auf die Höhe verstellbar, so dass verschiedenen Rückenlängen von sitzenden Personen Rechnung getragen werden kann.

Die Verstellung der Form einer Lordosestütze erfolgt vorteilhafterweise mit Hilfe eines Wölbelements, dessen Wölbung verstellbar ist. Ein solches Wölbelement kann insbesondere wenigstens einen biegeelastischen Streifen aufweisen, bei dem zwei auseinanderliegende Abschnitte zueinandergezogen werden, so dass sich der Streifen wölbt. Durch dieses einfache Zusammenziehen des Streifens an zwei verschiedenen Punkten kann so mit geringem Aufwand eine einstellbare Wölbung der Lordosestütze erreicht werden.

Die Erfindung wird nachfolgend anhand eines bevorzugten Ausführungsbeispiels unter Bezugnahme auf die beigefügten Zeichnungen näher erläutert.
Figur 1 zeigt eine schematische seitliche Schnittansicht durch einen Sitz zur Verwendung in einem Kraftfahrzeug,
Figur 2 zeigt eine innerhalb des Sitzes nach Figur 1 angeordnete Lordosestütze,
Figur 3 zeigt eine teilweise Aufsicht auf eine zur Verstellung der Lordosestütze gemäß Figur 2 verwendete Verstellvorrichtung, und
Figur 4 zeigt eine seitliche Schnittansicht durch das Getriebe der Verstellvorrichtung gemäß Figur 3.

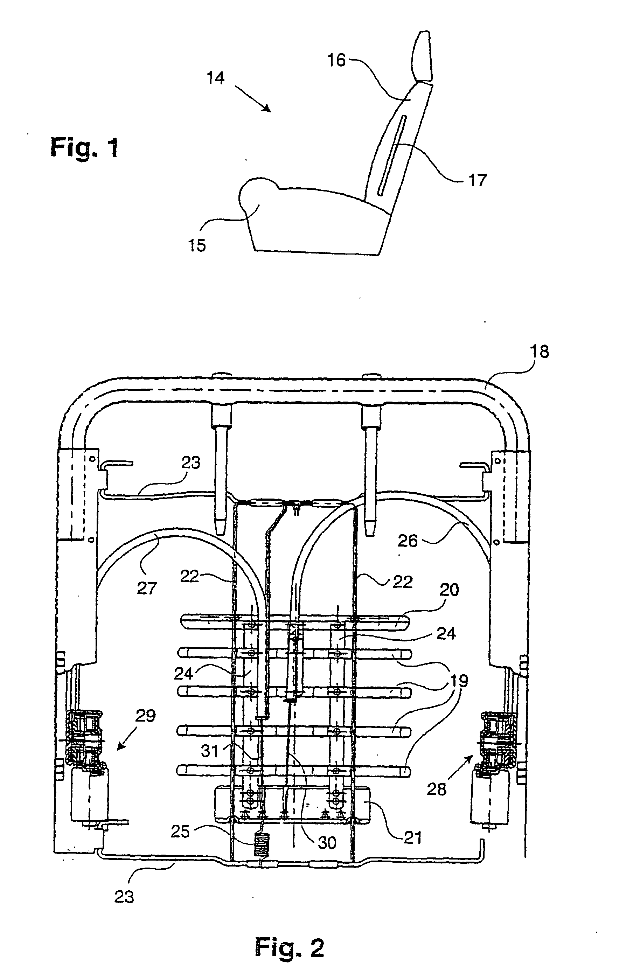

Der in Figur 1 schematisch dargestellte Sitz 14 dient zur Verwendung in einem Kraftfahrzeug und weist ein Sitzteil 15 und eine damit gelenkig verbundene Lehne 16 auf. Innerhalb der Lehne 16 ist unter einer Polsterung eine Lordosestütze 17 angeordnet, mit der die Wirbelsäule einer auf dem Sitz 14 sitzenden Person an einer bestimmten Stelle zusätzlich gestützt werden kann.

Um die Lordosestütze 17 auf die jeweiligen Bedürfnisse einer auf dem Sitz 14 sitzenden Person abstimmen zu können, kann die Lordosestütze 17 in Bezug auf die Höhe der Anordnung innerhalb der Lehne 16 verstellt werden. Dazu ist die Lordosestütze 17 mittig innerhalb der Lehne 16 längsverschieblich geführt. Weiterhin kann der nach vorne wirkende Druck der Lordosestütze 17 zur Veränderung ihrer Stützwirkung eingestellt werden.

Die in Figur 2 von vorne dargestellte Lordosestütze 17 weist einen Rahmen 18 zur Befestigung in der Lehne 16 auf, an dem die übrigen Teile der Lordosestütze 17 befestigt sind. Zwischen den beiden Längsholmen des Rahmens 18 sind zwei elastisch biegbare Längsstreifen 24 parallel angeordnet, die durch beabstandete Querstreifen 19 miteinander verbunden sind. Am oberen Ende der Längsstreifen 24 ist ein oberer Abschlussstreifen 20 und am unteren Ende der Längsstreifen 24 ist eine Verstärkungsplatte 21 befestigt. Der obere Abschlussstreifen 20 und die Verstärkungsplatte 21 sind längsverschieblich an zwei Längsstangen 22 gelagert, die sich parallel zu den Längsstreifen 24 erstrecken. Die Längsstreifen 22 sind an ihren oberen und unteren Enden über Querstangen 23 mit dem Rahmen 18 verbunden.

Die untere Querstange 23 ist über eine Schraubenfeder 25 mit der Verstärkungsplatte 21 verbunden. Dies hat zur Folge, dass durch nach oben gerichteten Zug die Verstärkungsplatte 21 zusammen mit den Längsstreifen 24, den Querstreifen 19 und den oberen Abschlussstreifen 20 entlang der Längsstangen 22 nach oben verschiebbar ist.

Die Längsstreifen 24 und deren Lagerung mittels des oberen Abschlussstreifens 20 und der Verstärkungsplatte 21 an den Längsstangen 22 sind so ausgestaltet, dass sich die Längsstreifen 24 bei einem Zusammendrücken des oberen Abschlussstreifens 20 und der unteren Verstärkungsplatte 21 gegen den Rücken einer auf dem Sitz 14 sitzenden Person vorwölben.

An den Längsholmen des Rahmens 18 sind unten eine Wölbungsverstellung 28 bzw. eine Höhenverstellung 29 befestigt. Dabei ist die Wölbungsverstellung 28 über einen Bowdenzug 26 mit dem oberen Abschlussstreifen 20 und der Verstärkungsplatte 21 verbunden. Der Bowdenzug 26 weist innen ein Zugseil 30 auf, das mit der Verstärkungsplatte 21 verbunden ist. Die Hülle des Bowdenzugs 26 hingegen stützt sich am oberen Abschlussstreifen 20 ab. Wenn nun die Wölbungsverstellung 28 das Zugseil 30 durch die Hülle des Bowdenzugs 26 in Richtung der Wölbungsverstellung 28 zieht, werden der obere Abschlussstreifen 20 und die Verstärkungsplatte 21 zusammengezogen, worauf sich die Wölbung der Längsstreifen 24 verstärkt. Bei einem Nachgeben der Wölbungsverstellung 28 wird das Zugseil 30 durch die Federkraft der beiden Längsstreifen 24 wieder zurückgezogen.

Die Höhenverstellung 29 wirkt über einen Bowdenzug 27, der eine Hülle und darin ein Zugseil 31 aufweist. Die Hülle des Bowdenzugs 27 stützt sich an der oberen Querstange 23 ab und das Zugseil 31 der Höhenverstellung ist mit der Verstärkungsplatte 21 verbunden. Wenn nun die Höhenverstellung 29 das Zugseil 31 zu sich zieht, wird die Verstärkungsplatte 21 gegen die Federkraft der Schraubenfeder 25 nach oben gezogen. Wenn die Höhenverstellung 29 das Zugseil 31 nachgibt, wird die Verstärkungsplatte 21 von der Schraubenfeder 25 nach unten gezogen. Da der obere Abschlussstreifen 20 gleitbeweglich an den beiden Längsstangen 22 gelagert ist, können auf diese Weise die beiden gewölbten Längsstreifen 24 zusammen mit den daran befestigten Querelementen 19 nach oben bzw. unten bewegt werden.

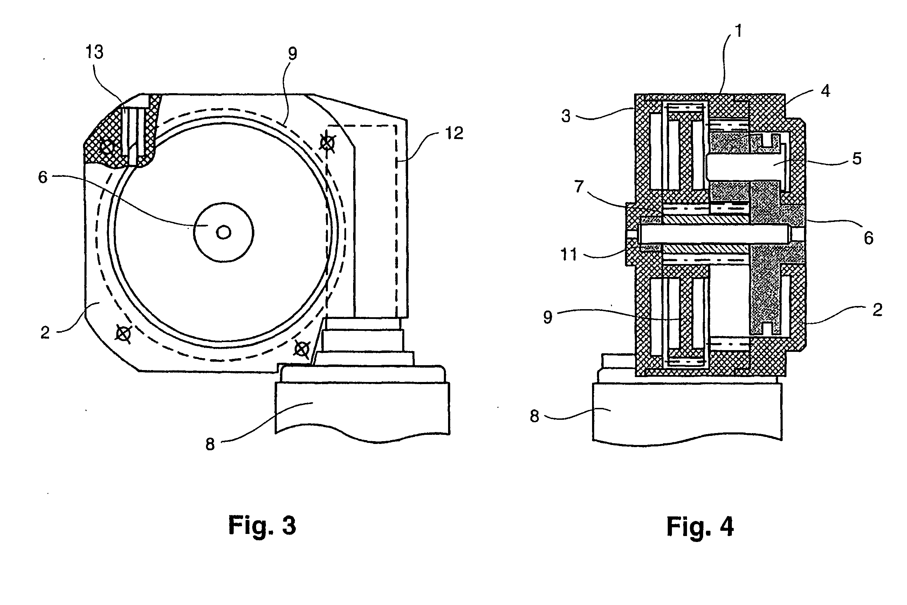

Die Wölbungsverstellung 28 und die Höhenverstellung 29 sind beide gleich aufgebaut und schematisch in den Figuren 3 und 4 dargestellt. Die beiden Verstellvorrichtungen 28, 29 weisen jeweils einen Motor 8 als Drehantrieb mit einem daran befestigten Getriebe auf, das auf das Zugseil 30 bzw. 31 wirkt. In Figur 3 ist eine Aufsicht auf das.Getriebe und der Motor teilweise dargestellt. Figur 4 zeigt eine Schnittansicht des Getriebes sowie. einen Teil des Motors 8.

Das in Figur 4 in Schnittansicht dargestellte Getriebe weist ein Gehäuse 1 auf, das mit dem Motor 8 verbunden ist. Beiderseits des Gehäuses 1 ist ein oberer Deckel 2 bzw. ein unterer Deckel 3 befestigbar. Die beiden Deckel 2, 3 weisen gegenüberliegende konzentrische Aufnahmen auf, die zur Lagerung der in Getriebe 1 angeordneten Räder dienen. Innerhalb des Gehäuses 1 ist ein Schneckenrad 9 angeordnet, das mit einer Außenverzahnung versehen ist und innen drehfest ein Zentralrad 7 einschließt, das rechts über das Schneckenrad 9 hinausragt. Rechts neben dem Zentralrad 7 ist zu diesem konzentrisch ein Seilrad 6 angeordnet, das über seinen Umfang eine Nut trägt. Das Seilrad 6 ist mit einer rechts angeformten Nabe in einer Öffnung des oberen Deckels 2 gelagert. Weiterhin weist das Seilrad 6 mittig eine Bohrung auf, in der eine Welle 11 gelagert ist, auf der das Zentralrad 7 gelagert ist und die mit ihrem dem Seilrad 6 gegenüberliegenden Ende mittels einer Buchse in dem unteren Deckel 3 gelagert ist.

An dem Seilrad 6 ist über einen Bolzen 5 ein Planetenrad 4 drehbar gelagert, das sich zwischen dem Seilrad 6 und dem Schneckenrad 9 befindet. Das Planetenrad 4 kämmt mit dem Zentralrad 7. In der Ebene des Planetenrads 4 ist in dem Gehäuse 1 ein Hohlrad mit Innenverzahnung ausgeformt, mit dem das Planetenrad 4 ebenfalls kämmt. Das Zentralrad 7 bildet mit dem im Gehäuse 1 ausgeformten Hohlrad, dem Planetenrad 4 und dem als Planetenradträger wirkenden Seilrad 6 ein Planetengetriebe, dessen Antrieb das Zentralrad 7 und dessen Abtrieb das Seilrad 6 ist.

In der in Figur 3 dargestellten Aufsicht des Getriebes sind gestrichelt das Schneckenrad 9 sowie eine mit dem Schneckenrad 9 in Eingriff stehende Schnecke 12 dargestellt. Die Schnecke 12 ist drehfest mit der Welle des Motors 8 verbunden und treibt das Schneckenrad 9 an. Bei der in Figur 3 dargestellten Aufsicht ist ein Teil des oberen Deckels 2 entfernt. In dem offengelegten Bereich ist eine Durchführung 13 zu sehen, die sich in der Ebene der Nut im Seilrad 6 befindet und tangential zu dieser Nut ausgerichtet ist. Die Durchführung 13 dient zum Hindurchführen des Zugseils 30 bzw. 31, das am Seilrad 6 befestigbar und in dessen Nut aufwickelbar ist. Außen endet die Durchführung 13 in einem Anschlag für die Hülle des Bowdenzugs 26 bzw. 27.

Beim Betätigen der Wölbungsverstellung 28 bzw. der Höhenverstellung 29 treibt der Motor 8 die Schnecke in Drehrichtung an, die das Schneckenrad 9 zusammen mit dem damit befestigten Zentralrad 7 dreht. Die Drehung des Zentralrads 7 bewirkt ein Abrollen des Planetenrads 4 in dem im Gehäuse 1 ausgeformten Hohlrad, so dass mittels des Bolzens 5 das Seilrad 6 mitgedreht wird. Das Seilrad 6 wiederum zieht an dem Seilzug 30 bzw. 31 und bewirkt auf diese Weise die Verstellung.

Im Stillstand wirkt zwar über dem Seilzug 30 bzw. 31 eine Zugkraft auf das Seilrad 6, die jedoch auf Grund der selbstsperrenden Wirkung des Schneckengetriebes 9, 12 nicht zu einer Drehung der Welle des Motors 8 führt. Es sind somit keine zusätzlichen Verriegelungseinrichtungen erforderlich, um bei nichtangeregtem Motor 8 die beiden Verstellvorrichtungen 28, 29 in der jeweiligen Position zu halten.

Die beiden Verstellvorrichtungen 28, 29 sind jeweils mit Begrenzungen ausgerüstet, um einen definierten Verstellbereich zu erzielen. Diese Begrenzungen dienen dazu, Beschädigungen der Lordosestütze 17 zu vermeiden und definierte Verstellpositionen zu schaffen. Um den Verstellbereich zu begrenzen, weist das im Gehäuse 1 ausgestaltete Hohlrad nur über einen Teil seines Umfangs eine Innenverzahnung auf. Der restliche Umfangsteil dagegen ragt zumindest an seinen Endbereichen so weit in Richtung des Zentralrads 7 vor, dass das Planetenrad 4 nicht in diesen Bereich hinein abrollen kann. Sobald das Planetenrad 4 ein Ende dieses Bereichs erreicht, schlägt es mit zumindest einem seiner Zähne an diesem Bereich an und verhindert eine Weiterbewegung des Seilrads 6. Auf Grund der auf der Innenverzahnung des Hohlrads im Gehäuse 1 abrollenden Außenverzahnung des Planetenrads 4 kommt es bei dem Anschlagen an den nicht verzahnten Teil des Hohlrads vorteilhafterweise zu einer sehr geringen Geräuschentwicklung. Durch die erfindungsgemäße Ausgestaltung des Getriebes in den Verstellvorrichtungen 28, 29 wird eine sehr geringe Geräuschentwicklung insbesondere beim Erreichen der Anschläge erreicht, die sich vorteilhaft auf den Bedienkomfort der Verstellvorrichtungen 28, 29 auswirkt.

## Patentansprüche

1. Vorrichtung zur Verstellung einer Komponente (17) eines Sitzes (14) oder einer Liege, mit einem Drehantrieb und einem von dem Drehantrieb antreibbaren Getriebe, das einen Abtrieb zum Verstellen der Komponente (17) des Sitzes (14) bzw. der Liege aufweist, **dadurch gekennzeichnet, dass** das Getriebe ein Planetengetriebe mit einem von dem Drehantrieb (8) antreibbaren Zentralrad (7), einem konzentrisch zum Zentralrad (7) drehbar gelagerten Planetenradträger (6) mit wenigstens einem drehbar gelagerten Planetenrad (4) und einem innenverzahnten Hohlrad (1) aufweist, wobei das Hohlrad (1) konzentrisch zum Zentralrad (7) drehfest angeordnet ist, das wenigstens eine Planetenrad (4) mit dem Zentralrad (7) und dem Hohlrad (1) in Eingriff steht und der Abtrieb des Getriebes vom Planetenradträger (6) antreibbar ist.

2. Vorrichtung nach Anspruch 1, **dadurch gekennzeichnet, dass** zur Begrenzung des Verstellbereichs der Komponente (17) das Hohlrad (1) nur über einen Teil seines Umfangs innenverzahnt ist, wobei der nicht innenverzahnte Teil des Hohlrads (1) so ausgestaltet ist, dass das Planetenrad (4) nur in den innenverzahnten Teil des Hohlrads (1) auf dem Hohlrad (1) abrollen kann.

3. Vorrichtung nach einem der vorhergehenden Ansprüche, **dadurch gekennzeichnet, dass** das Getriebe zwei Planetenräder (4) aufweist.

4. Vorrichtung nach einem der vorhergehenden Ansprüche, **dadurch gekennzeichnet, dass** das Zentralrad (7) drehfest mit einem Schneckenrad (9) verbunden ist, das mit einer Schnecke in Eingriff steht, die drehfest mit einer Welle des Drehantriebs (8) verbunden ist.

5. Vorrichtung nach einem der vorhergehenden Ansprüche, **dadurch gekennzeichnet, dass** der Abtrieb eine Trommel (6) aufweist, an der ein Zugseil (30, 31) befestigt und aufwickelbar ist.

6. Vorrichtung nach einem der vorhergehenden Ansprüche, **dadurch gekennzeichnet, dass** das Hohlrad (1) in einem Gehäuse (1, 2, 3) des Getriebes ausgeformt ist.

7. Vorrichtung nach einem der vorhergehenden Ansprüche, **dadurch gekennzeichnet, dass** die Vorrichtung eine Rückholfeder (24, 25) aufweist, die in eine Richtung des Verstellbereichs der zu verstellenden Komponente (17) eine Vorspannung ausüben kann.

8. Vorrichtung nach einem der vorhergehenden Ansprüche, **dadurch gekennzeichnet, dass** zumindest die Endbereiche des nicht innenverzahnten Teils des Hohlrads (1) zumindest an der Oberfläche aus einem dämpfenden Material bestehen.

9. Vorrichtung nach einem der vorhergehenden Ansprüche, **dadurch gekennzeichnet, dass** die verstellbare Komponente (17) eine Lordosestütze innerhalb einer Rückenlehne (16) des Sitzes bzw. der Liege ist, wobei die Lordosestütze (17) in Bezug auf die Lage und/oder die Form verstellbar ist.

10. Vorrichtung nach Anspruch 9, dadurch **gekennzeichnet**, dass die Lordosestütze (17) ein Wölbelement (19, 24) aufweist, dessen Wölbung verstellbar ist.

## Claims

1. Device for adjusting a component (17) of a seat (14) or a lounger,
having a rotary drive and a gearbox able to be driven by the rotary drive which has an output for adjusting the component (17) of the seat (14) or lounger, **characterised in that**
the gearbox has a planetary gear train having a sunwheel (7) able to be driven by the rotary drive (8), and a planetary gear carrier (6) mounted to rotate concentrically with the sunwheel (7) and having at least one planetary gear (4) mounted to rotate and an internally toothed annular gear (1),
the annular gear (1) being arranged concentrically to the sunwheel (7) and being mounted not rotatably, the at least one planetary gear (4) engaging with the sunwheel (7) and the annular gear (1), and the output of the gearbox being drivable by the planetary gear carrier (6).

2. Device according to claim 1, **characterised in that** to limit the range of adjustment of the component (17), the annular gear (1) is internally toothed for only part of its circumference, the non-internally-toothed part of the annular gear (1) being so designed that the planetary gear (4) can roll on the annular gear (1) only in the internally toothed part of the annular gear (1).

3. Device according to any one of the preceding claims, **characterised in that** the gearbox has two planetary gears (4).

4. Device according to any one of the preceding claims, **characterised in that** the sunwheel (7) is connected to a wormwheel (9) to be solid in rotation therewith, the wormwheel (9) engaging with a worm which is connected to a shaft of the rotary drive (8) to be solid in rotation therewith.

5. Device according to any one of the preceding claims, **characterised in that** the output has a drum (6) to which a traction cable (30, 31) is fastened and on which it can be wound up.

6. Device according to any one of the preceding claims, **characterised in that** the annular gear (1) is formed in a housing (1, 2, 3) of the gearbox.

7. Device according to any one of the preceding claims, **characterised in that** the device has a return spring (24, 25) which can exert. pretensioning in one direction of the range of adjustment of the component (17) to be adjusted.

8. Device according to any one of the preceding claims, **characterised in that** at least the end regions of a non-internally-toothed part of the annular gear (1) are composed of a damping material, at least at the surface.

9. Device according to any one of the preceding claims, **characterised in that** the adjustable component (17) is a lumbar support within a backrest (16) of the seat or lounger, the lumbar support (17) being adjustable in respect of its position and/or shape.

10. Device according to claim 9, **characterised in that** the lumbar support (17) has a curvature element (19, 24) whose curvature is adjustable.

## Revendications

1. Dispositif de déplacement d'un élément constitutif (17) d'un siège (14) ou d'une couchette, avec un entraînement rotatif et un engrenage pouvant être commandé par l'entraînement rotatif, lequel présente un entraînement pour déplacer l'élément constitutif (17) du siège (14) et/ou de la couchette, **caractérisé en ce que** l'engrenage présente un engrenage planétaire avec une roue centrale (7) pouvant être entraînée par l'entraînement rotatif (8), un porte-satellites (6) monté de manière concentrique par rapport à la roue centrale (7) et de façon à pouvoir tourner avec au moins une roue planétaire (4) montée de manière rotative et avec une couronne de train planétaire à denture intérieure (1), dans lequel la couronne de train planétaire (1) est disposée de manière concentrique par rapport à la roue centrale (7) de manière solidaire en rotation, **en ce qu'**au moins une roue planétaire (4) est en prise avec la roue centrale (7) et la couronne de train planétaire (1), et **en ce que** l'entraînement de l'engrenage peut être commandé par le porte-satellite(6).

2. Dispositif selon la revendication 1, **caractérisé en ce que** pour délimiter la zone de déplacement de l'élément constitutif (17), la couronne de train planétaire (1) présente une denture intérieure uniquement sur une partie de sa périphérie, de sorte que la partie ne présentant pas de denture intérieure de la couronne de train planétaire (1) est réalisée de manière à ce que la roue planétaire (4) puisse se dérouler sur la couronne de train planétaire (1) uniquement dans la partie avec la denture intérieure de la couronne de train planétaire (1).

3. Dispositif selon l'une des revendications précédentes, **caractérisé en ce que** l'engrenage présente deux roues planétaires (4).

4. Dispositif selon l'une quelconque des revendications précédentes, **caractérisé en ce que** la roue centrale (7) est reliée de manière solidaire en rotation avec une roue hélicoïdale (9), laquelle est en prise avec une vis sans fin, laquelle est reliée de manière solidaire en rotation avec un arbre de l'entraînement rotatif (8).

5. Dispositif selon l'une quelconque des revendications précédentes, **caractérisé en ce que** l'entraînement présente un tambour (6), sur lequel un câble de traction (30, 31) peut être fixé et enroulé.

6. Dispositif selon l'une quelconque des revendications précédentes, **caractérisé en ce que** la couronne de train planétaire (1) est formée dans un boîtier (1, 2, 3) de l'engrenage.

7. Dispositif selon l'une quelconque des revendications précédentes, **caractérisé en ce que** le dispositif présente un ressort de rappel (24, 25) pouvant exercer une précontrainte dans une direction de la zone de déplacement de l'élément constitutif (17) à déplacer.

8. Dispositif selon l'une quelconque des revendications précédentes, **caractérisé en ce qu'**au moins les zones d'extrémité de la partie sans denture intérieure de la couronne de train planétaire (1) se composent, au moins au niveau de la surface, d'un matériau amortissant.

9. Dispositif selon l'une quelconque des revendications précédentes, **caractérisé en ce que** l'élément constitutif (17) déplaçable est un appui cervical et lombaire à l'intérieur d'un dossier (16) du siège et/ou de la couchette, dans lequel l'appui cervical et lombaire (17) peut être déplacé en ce qui concerne la position et/ou la forme.

10. Dispositif selon la revendication 9, **caractérisé en ce que** l'appui cervical et lombaire (17) présente un élément bombé (19, 24) dont le bombement peut être déplacé.
